(19) Europäisches Patentamt / European Patent Office / Office européen des brevets

(11) EP 3 275 523 B1

# (12) EUROPEAN PATENT SPECIFICATION

(45) Date of publication and mention
of the grant of the patent:
**17.06.2020 Bulletin 2020/25**

(21) Application number: **16768793.8**

(22) Date of filing: **23.03.2016**

(51) Int Cl.:
*B01D 17/038* (2006.01)   *B04C 5/04* (2006.01)
*B04C 5/081* (2006.01)   *B04C 5/26* (2006.01)
*B04C 9/00* (2006.01)   *C02F 1/38* (2006.01)
*B04C 5/00* (2006.01)   *C08F 6/00* (2006.01)

(86) International application number:
**PCT/JP2016/059114**

(87) International publication number:
**WO 2016/152890 (29.09.2016 Gazette 2016/39)**

(54) **METHOD FOR SEPARATING POLYMER SOLUTION AND WATER**

VERFAHREN ZUR TRENNUNG EINER POLYMERLÖSUNG VON WASSER

PROCÉDÉ POUR LA SÉPARATION DE SOLUTION DE POLYMÈRE ET D'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2015 JP 2015064443**

(43) Date of publication of application:
**31.01.2018 Bulletin 2018/05**

(73) Proprietor: **Zeon Corporation
Tokyo 100-8246 (JP)**

(72) Inventors:
• **MORIMOTO, Chika
Tokyo 100-8246 (JP)**

• **MATSUOKA, Takahito
Tokyo 100-8246 (JP)**
• **NAKAMURA, Masao
Tokyo 100-8246 (JP)**

(74) Representative: **Maiwald Patent- und
Rechtsanwaltsgesellschaft mbH
Elisenhof
Elisenstraße 3
80335 München (DE)**

(56) References cited:
EP-A1- 2 368 917   WO-A1-2011/000052
JP-A- H0 656 753   JP-A- H11 267 405
JP-A- S57 200 402   JP-A- 2009 091 574
JP-A- 2009 221 447   JP-A- 2013 028 758

**Description**

BACKGROUND OF THE INVENTION

Field of the Invention

The present invention relates to a separation method in which a water is separated from a liquid mixture including a polymer solution and a water, where the polymer solution includes a polymer and a non-aqueous organic solvent.

Description of the Related Art

When a polymer is manufactured using a homogeneous catalyst, a metallic component in the homogeneous catalyst sometimes remain in the polymer. The metallic component remained in the polymer could be a cause of an equipment corrosion for manufacturing the polymer. In addition, the metallic component remained in the polymer sometimes brought degradation of the polymer by reacting due to air, UV rays, etc., causing trouble in the manufacturing process such as an abnormality in the shape of polymer pellets, or having an influence on the polymer in hue. Further, the metallic component remained in the polymer sometimes caused quality issues such as a hygroscopicity improvement of the polymer or a contamination of foreign matters derived from the catalyst residue.

Patent article 1 extracts the homogeneous catalyst in the polymer solution to the water layer by mixing the acid compound, the alcohol and the water with the polymer solution. Subsequently, the polymer solution and the water are separated using such as a centrifugal separator, and then, the homogeneous catalyst is removed from the polymer solution. A settled separation and the like are also known as the method to separate the polymer solution and the water, other than the method to use the centrifugal separator.

The settled separation separates the polymer solution and the water based on a principal that the water having a heavier specific gravity sediment in a vertical direction due to the difference in specific gravities of the polymer solution and the water. However, the settled separation requires a long time for the water sedimentation and the separation of the polymer solution, which leads to a problem of a low productivity of the polymer solution. The centrifugal separator separate the polymer solution and the water using a centrifugal force in addition to the difference in specific gravity of the polymer solution and the water, and thus, it is capable to separate in a shorter time relative to the settled separation. However, there is a problem that time and labor are required for the maintenance of the centrifugal separator.

Patent article 2 mentions a separation method in which the water is separated from the liquid mixture of the cyclohexane oxidation liquid and the water, using the liquid cyclone-type separation device, however, it is not intended to separate polymer solutions and the water.

Patent Document 1: JP2009-91574A
Patent Document 2: JP H11-267405A

EP 2 368917 A1 describes a process for producing hydrogenated nitrile rubber being substantially free of volatile compounds. A degassing vessel is used to separate and remove vapors including volatile compounds from a heated fluid comprising a non-volatile hydrogenated nitrile rubber polymer.

BRIEF SUMMARY OF THE INVENTION

The present invention, considering the above prior methods, is to provide a method to efficiently separate the water from the liquid mixture, including the polymer solution and the water.

DETAILED DESCRIPTION OF THE INVENTION

As a result of keen examination to solve the above problems, the present inventors have found that the above problems can be solved by making the viscosity of the polymer solution within a specific range in the separation method in which the water is separated from the liquid mixture including the polymer solution and the water using the liquid cyclone-type separation device.

The summary of the invention to solve the above problems is as follows.

[1] A method for separating a water from a liquid mixture, in which the liquid mixture comprises the water and a polymer solution, the polymer solution comprises a polymer and a non-aqueous organic solvent, and the polymer solution has a viscosity of 300 mPa·s or more and 100,000 mPa·s or less. And the method for separating the water from a liquid mixture includes a step of introducing the liquid mixture in a liquid cyclone-type separation device to separate the water from the liquid mixture.

[2] The method for separating the water from the liquid mixture of the above [1], in which the liquid cyclone-type separation device having a hollow cylindrical part and a hollow conical part at lower side of the cylindrical part, the cylindrical part has a carry-in passage, introducing the liquid mixture in the liquid cyclone-type separation device, and a collection opening, collecting the polymer solution separated from the liquid mixture, and the conical part has a discharge opening, discharging the water separated from the liquid mixture, provided at the lower tip of a reduced diameter.

[3] The method for separating the water from the liquid mixture according to the above [1] or [2], in which a polymer concentration of the polymer solution is 10 mass% or more and 60 mass% or less.

[4] The method for separating the water from the liquid mixture according to any one of the above [1] to [3], in which the polymer is at least one of a diene polymer and an aromatic vinyl polymer.

[5] The method for separating the water from the liquid mixture according to any one of the above [1] to [4], wherein a rate of introducing the liquid mixture inside the liquid cyclone-type separation device is 0.1 m/s or more.

[6] The method for separating the water from the liquid mixture according to any one of the above [1] to [5], wherein a plurality of the liquid cyclone-type separation devices are arranged in a line.

According to the separation method of the invention, the water can be efficiently separated from the liquid mixture including the water and the polymer solution by making the viscosity of the polymer solution within a specific range, using the liquid cyclone-type separation device.

Fig. 1 is a perspective view of the liquid cyclone-type separation device of the invention.
Fig. 2 is a schematic cross sectional view of the liquid cyclone-type separation device of Fig. 1, which is cut along A-A line.
Fig. 3 is a schematic cross sectional view of the liquid cyclone-type separation device of Fig. 1, which is cut along B-B line.
Fig. 4 is a configurational view, in which a plurality of the liquid cyclone-type separation device of the invention are arranged in series.

The separation method of the invention separates the water from the liquid mixture including the polymer solution and the water, in which the polymer solution includes the polymer and the non-aqueous organic solvent. The viscosity of the polymer solution is 300 mPa·s or more and 100,000 mPa·s or less. The water is separated from the liquid mixture by introducing the liquid mixture in the liquid cyclone-type separation device.

(Polymer solution)

The polymer solution of the invention includes the polymer and the non-aqueous organic solvent, in which the polymer is solved in the non-aqueous organic solvent.

The polymer is not particularly limited as long as it is solved in the non-aqueous organic solvent, however, a diene polymer, an aromatic vinyl polymer, an acrylic polymer, a fluorine polymer, a silicone polymer, etc. can be exemplified. The polymer of the invention can be one kind solely or optionally, two or more kinds thereof. Among said polymers, considering efficiently separating the water, the polymer preferably includes the diene polymer and/or the aromatic vinyl polymer, more preferably includes the diene polymer and/or the aromatic vinyl polymer.

The diene polymer is a polymer including monomer units, obtained by polymerizing conjugated dienes. The ratio of the monomer unit, obtained by polymerizing the conjugated dienes in the diene polymer is, with respect to all the monomer units, preferably 40 mass% or more, more preferably 50 mass% or more, and further preferably 60 mass% or more. Note, "monomer unit" in the invention is the structural unit in the polymer formed by polymerizing the monomer.

Examples of the diene polymer are a homopolymer of the conjugated diene; a copolymer of the conjugated diene of different kinds; a copolymer of the conjugated diene and the other monomer copolymerizable with said conjugated diene; the hydrogen additives thereof; etc.

Examples of the conjugated diene are 1,3-butadiene, 2-methyl-1,3-butadiene (isoprene), 2,3-dimethyl-1, 3-butadiene, 2-ethyl-1,3-butadiene, 2-chloro-1,3-butadiene, 1,3-pentadiene, 1,3-hexadiene and 2,4-hexadiene, etc. Among these, 1,3-butadiene and 2-methyl-1,3-butadiene (isoprene) are preferable.

Examples of the other monomer copolymerizable with said conjugated diene are $\alpha,\beta$-unsaturated nitrile compounds such as (meth)acrylonitrile, $\alpha$-chloroacrylonitrile and $\alpha$-ethylacrylonitrile; unsaturated carboxylic acids such as (meth)acrylic acid, itaconic acid and fumaric acid; aromatic vinyl monomers such as styrene, chlorostyrene, vinyl toluene, t-butylstyrene, vinyl benzoate, methyl vinyl benzoate, vinyl naphthalene, chloromethylstyrene, hydroxymethylstyrene, $\alpha$-methylstyrene and divinyl benzene; olefins such as ethylene and propylene; halogen atom-containing monomers such as vinyl chloride and vinylidene chloride; vinyl esters such as vinyl acetate, vinyl propionate, vinyl butylate and vinyl benzoate; vinyl ethers such as methylvinyl ether, ethylvinyl ether, butylvinyl ether; vinyl ketones such as methylvinyl ketone, ethylvinyl ketone, butylvinyl ketone, hexylvinyl ketone and isopropenylvinyl ketone; heterocycle containing vinyl compounds such as N-vinyl pyrrolidone, vinyl pyridine and vinyl iminazole; ester methacrylate compounds such as methyl methacrylate; hydroxyalkyl group containing compounds such as $\beta$-hydroxyethyl(meth)acrylate; amide based monomers such as (meth)acryl amide, N-methylol(meth)acryl amide and acrylamide-2-methylpropane sulfonic acid. Among these, the aromatic vinyl monomer is preferable, and styrene is more preferable. Note, the conjugated diene and the other monomer copolymerizable with said conjugated diene can be used with 1 kind singly or optionally a combination of 2 or more kinds at an arbitrary ratio, respectively. According to the invention, meth(acryl) includes both acryl and methacryl.

The aromatic vinyl polymer is the polymer including the monomer unit obtained by polymerizing the aromatic vinyl. The ratio of the monomer unit obtained by polymerizing the aromatic vinyl in the aromatic vinyl polymer is preferably 60 mass% or more, more preferably 70 mass% or more, and further preferably 80 mass% or more, with respect to all the monomer units.

Examples of the aromatic vinyl polymer are a homopolymer of the aromatic vinyl; a copolymer of the aromatic vinyl of different kinds; a copolymer of the aromatic vinyl and the other monomer copolymerizable with said aromatic vinyl; the hydrogen additives thereof; etc.

Examples of the aromatic vinyl are styrene, $\alpha$-methylstyrene, 2-methylstyrene, 3-methylstyrene, 4-methylstyrene, 2-ethylstyrene, 3-ethylstyrene, 4-ethylstyrene, 2,4-diisopropyl styrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinyl naphthalene, etc.

Examples of the other monomer copolymerizable with said aromatic vinyl are conjugated dienes such as 1,3-butadiene and isoprene (2-methyl-1,3-butadiene); $\alpha,\beta$-unsaturated nitrile compounds such as (meth)acrylonitrile, $\alpha$-chloroacrylonitrile and $\alpha$-ethylacrylonitrile; unsaturated carboxylic acids such as (meth)acrylic acid, itaconic acid and fumaric acid; acid anhydrides thereof; olefins such as ethylene and propylene; unsaturated carboxylic acid ester monomers. Note, the aromatic vinyl and the other monomer copolymerizable with said aromatic vinyl can be used with 1 kind singly or optionally, a combination of 2 or more kinds at an arbitrary ratio, respectively.

Concrete examples of the abovementioned diene polymer or aromatic vinyl polymer are polybutadiene rubber (BR), styrene·butadiene copolymer rubber (SBR), styrene·isoprene copolymer rubber (SIR), styrene·isoprene·butadiene copolymer rubber (SIBR), styrene·butadiene·styrene blockcopolymer (SBS), styrene·ethylene·butadiene·styrene blockcopolymer (SEBS), styrene·isoprene·styrene blockcopolymer (SIS) and styrene·ethylene·propylene·styrene blockcopolymer (SEPS), etc. Among all, polybutadiene rubber (BR), styrene·butadiene copolymer rubber (SBR), styrene·isoprene·butadiene copolymer rubber (SIBR) and styrene·isoprene·styrene blockcopolymer (SIS) are preferable. These polymers can be used with 1 kind singly or optionally, a combination of 2 or more kinds.

The acrylic polymer is a polymer including a monomer unit derived from a compound (sometimes referred to as "an ester methacrylate compound", hereinafter) shown by the following general formula (1).

$$CH_2 = CR^1 - COOR^2 \qquad (1)$$

In the above formula, "$R^1$" is a hydrogen atom or a methyl group and "$R^2$" is an alkyl group or a cycloalkyl group.

The ratio of the monomer unit derived from an ester methacrylate compound in the acrylic polymer is preferably 40 mass% or more, more preferably 50 mass% or more, and further preferably 60 mass% or more, with respect to all the monomer units.

Concrete examples of the ester methacrylate compound are ethyl methacrylate, propyl methacrylate, isopropyl methacrylate, n-butyl methacrylate, isobutyl methacrylate, t-butyl methacrylate, n-amyl methacrylate, isoamyl methacrylate, n-hexyl methacrylate, 2-ethylhexyl methacrylate, lauryl methacrylate, stearyl methacrylate, etc.

Examples of the acrylic polymer are a homopolymer of the ester methacrylate compound; a copolymer of the ester methacrylate compound of different kinds; a copolymer of the ester methacrylate compound and the other monomer copolymerizable with said ester methacrylate compound; etc.

Examples of the other monomer copolymerizable with the ester methacrylate compound are $\alpha,\beta$-unsaturated nitrile compounds such as (meth)acrylonitrile, $\alpha$-chloroacrylonitrile and $\alpha$-ethylacrylonitrile; unsaturated carboxylic acids such as (meth)acrylic acid, itaconic acid and fumaric acid; carboxylic acid esters having 2 or more carbon-carbon double bond such as ethylene glycol di(meth)acrylate, diethylene glycol di(meth)acrylate and trimethylol propane tri(meth)acrylate; unsaturated esters including fluorine in side chains of perfluorooctylethyl(meth) acrylate; aromatic vinyl monomers such as styrene, chlorostyrene, vinyl toluene, t-butylstyrene, vinyl benzoate, methyl vinyl benzoate, vinyl naphthalene, chloromethylstyrene, hydroxymethylstyrene, $\alpha$-methylstyrene and divinyl benzene; amide based monomers such as (meth)acrylamide, N-methylol(meth)acrylamide, acrylamide-2-methylpropane sulfonic acid; olefins such as ethylene and propylene; diene based monomers such as butadiene and isoprene; halogen atom-containing monomers such as vinyl chloride and vinylidene chloride; vinyl esters such as vinyl acetate, vinyl propionate, vinyl butylate and vinyl benzoate; vinyl ethers such as methylvinyl ether, ethylvinyl ether and butylvinyl ether; vinyl ketones such as methylvinyl ketone, ethylvinyl ketone, butylvinyl ketone, hexylvinyl ketone and isopropenylvinyl ketone; heterocycle containing vinyl compounds such as N-vinyl pyrrolidone, vinyl pyridine and vinyl iminazole; glycidyl ethers such as allyl glycidyl ether; glycidyl esters such as glycidyl(meth)acrylate. Note, the compound shown by the following general formula (1) and the other monomer copolymerizable with ester methacrylate compound can be used with 1 kind singly or optionally, a combination of 2 or more kinds at an arbitrary ratio, respectively.

Concrete examples of the acrylic polymer are butyl acrylate polymer, butylacrylat- allylglycidylether copolymer, butylacrylate·trimethylolpropane(meth)acrylate copolymer, methacrylate·butylacrylate copolymer, methoxyethylacrylate·butylacrylate copolymer, methylacrylate·ethylene copolymer, butyl acrylate·ethylene copolymer. These polymers can be used with 1 kind singly or optionally, a combination of 2 or more kinds.

The fluorine polymer is the polymer including the monomer unit obtained by polymerizing the monomer including a fluorine atom. The ratio of the monomer unit obtained by polymerizing the monomer including the fluorine atom in the fluorine polymer is preferably 70 mass% or more, and more preferably 80 mass% or more, with respect to all the monomer units.

Examples of the fluorine polymer are a homopolymer of the monomer including the fluorine atom; a copolymer of the monomer including the fluorine atom of different kinds; a copolymer of the monomer including the fluorine atom and the other monomer copolymerizable with said monomer including the fluorine atom; etc.

Examples of the monomer including the fluorine atom are vinylidene fluoride, tetrafluoroethylene, hexafluoropropylene, trifluorovinyl chloride, fluoridevinyl, perfluoroalkyl vinyl ether, etc.

Examples of the other monomer copolymerizable with the monomer including the fluorine atom are olefins such as ethylene, propylene, 1-butene; aromatic vinyl monomers such as styrene, $\alpha$-methylstyrene, t-butylstyrene, vinyl toluene, chlorostyrene; $\alpha,\beta$-unsaturated nitrile compounds such as (meth)acrylonitrile; ester methacrylate compounds such as methyl methacrylate, butyl methacrylate, 2-ethylhexyl methacrylate; amide based monomers such as (meth)acrylamide, N-methylol(meth)acrylamide and N-butoxymethyl(meth)acrylamide; unsaturated carboxylic acids such as (meth)acrylic acid, itaconic acid, fumaric acid, crotonic acid and maleic acid; unsaturated compounds including an epoxy group such as allyl glycidyl ether and glycidyl methacrylate; unsaturated compounds including an amino group such as dimethylaminoethyl methacrylate and diethylaminoethyl methacrylate; unsaturated compounds including a sulphonic acid group such as styrene sulfonate, vinyl sulfonate and (meth)allyl sulfonate; unsaturated compounds including a sulfuric acid group such as 3-allyloxy-2-hydroxypropane sulfate; unsaturated compounds including a phosphate group such as (meth)acrylic acid-3-chloro-2-phosphate propyl and 3-allyloxy-2-hydroxypropanephosphate. Note, the monomer including the fluorine atom and the other monomer copolymerizable with said monomer including the fluorine atom can be used with 1 kind singly or optionally, a combination of 2 or more kinds at an arbitrary ratio, respectively.

Examples of the fluorine polymer are polyvinylidene fluoride (PVDF), polytetrafluoroethylene (PTFE), vinylidene fluoride-hexafluoropropylene copolymer, tetrafluoroethylene-hexafluoropropylene copolymer (FEP), polyfluoridevinyl, tetrafluoroethylene-perfluoroalkyl vinyl ether copolymer, etc. These polymers can be used with 1 kind singly or optionally, a combination of 2 or more kinds.

Examples of the silicone polymer are silicone rubber, fluorosilicone rubber and polyimide silicon.

Weight-average molecular weight (Mw) of the polymer is not particularly limited, however, weight-average molecular weight in terms of polystyrene measured by gel permeation chromatography (GPC) using tetrahydrofuran (THF) as a solvent is preferably 30,000 to 2,000,000, and more preferably 100,000 to 550,000.

Further, the molecular weight distribution (Mw/Mn) of the polymer is not particularly limited, however, it is preferably 3.0 or less, more preferably 2.8 or less, and particularly preferably 2.0 or less. The molecular weight distribution (Mw/Mn) of the polymer is a value in which the above weight-average molecular weight (Mw) is divided by a number-average molecular weight (Mn) in terms of polystyrene measured by gel permeation chromatography (GPC) using tetrahydrofuran (THF) as a solvent.

According to the polymer solution of the invention, 1 kind singly or optionally 2 or more kinds of the polymer can be solved in the non-aqueous organic solvent.

The non-aqueous organic solvent is not particularly limited, as long as it solves the abovementioned polymers. The non-aqueous organic solvent is an organic solvent, which does not substantially dissolve in the water. Concrete examples of the non-aqueous organic solvent are saturated hydrocarbons such as butane, pentane, hexane, heptane, cyclopentane, cyclohexane, methyl cyclohexane, dimethyl cyclohexane, trimethyl cyclohexane, ethyl cyclohexane, diethyl cyclohexane, decahydronaphthalene, bicycloheptane, tricyclodecane, hexahydroindene cyclohexane and cyclooctane; unsaturated hydrocarbons such as 1-butene, 2-butene, 1-pentene and 2-pentene; aromatic hydrocarbons such as benzene, toluene and xylene; halogenated hydrocarbons such as chloroform, dichloromethane, chlorobenzene and dichlorobenzene; and propylene glycols. Among all, unsaturated hydrocarbons, saturated hydrocarbons and aromatic hydrocarbons are preferable and saturated hydrocarbons are more preferable. The abovementioned water-insoluble organic solvent can be used with 1 kind singly or optionally, a combination of 2 or more kinds.

As polymerization reaction obtaining the polymer solution, any of a radical polymerization, an anion polymerization, a cation polymerization, a coordination anionic polymerization, a coordination cation polymerization and a living polymerization can be used. A living anion polymerization, a living cation polymerization, a living radical polymerization, a living coordination polymerization including a pseudo living, etc. can be used as the living polymerization. Considering that controls of weight-average molecular weight and structure of the obtained polymer and operations of polymerization of the obtained polymer are easy, a polymerization reaction by the living polymerization is preferable, and a polymerization reaction by the living coordination polymerization including the pseudo living and the living anion polymerization are more preferable.

The polymer solution is obtained by polymerizing the monomers for obtaining the abovementioned polymer, using the homogeneous catalyst in the non-aqueous organic solvent. Polymerization is performed within a temperature range of generally 0 to 150°C, preferably 10 to 100°C, and particularly preferably 20 to 80°C. Polymerization reaction state can be any of a solution polymerization, a slurry polymerization, etc., however, removal of the reaction heat is easy when using the solution polymerization. Any method can be adopted for the polymerization method, such as a batch type, a continuous type, etc.

The homogeneous catalyst is not particularly limited. The homogeneous catalyst is a catalyst which can be solved in the non-aqueous organic solvent. Concrete examples are organo alkalimetal compounds, organo alkaline earth metal compounds, the homogeneous catalysts including such as lanthanum-series metal compounds as a primary catalyst, and cyclopentadienyltitanium compounds; Ziegler catalysts such as diethylaluminiumchloride-cobalt base, trialkylaluminium-boron trifluoride-nickel base, diethylaluminiumchloride-nickel base; etc.

The organo alkalimetal compounds include, for instance, organic monolithium compounds such as n-butyllithium, sec-butyllithium, t-butyllithium, hexyllithium, phenyllithium, stilbenelithium; organic polyvalent lithium compounds such as dilithiomethane, 1,4-dilithiobutane, 1,4-dilithio-2-ethylcyclohexane, 1,3,5-trilithio benzene, 1,3,5-tris(lithio methyl)benzene, organic sodium compounds such as sodium naphthalene, organic potassium compounds such as potassium naphthalene; etc.

The organo alkaline earth metal compounds include, for instance, di-n-butyl magnesium, di-n-hexylmagnesium, diethoxy calcium, distearic acid calcium, di-t-butoxy strontium, diethoxy barium, diisopropoxy barium, diethylmercapto barium, di-t-butoxy barium, diphenoxy barium, diethylamino barium, distearic acid barium, diketyl barium, etc.

The homogeneous catalysts including lanthanum-series metal compounds as the primary catalyst can exemplify such as a homogeneous catalyst including a primary catalyst of a lanthanoid metal salt, which is made from a lanthanoid metal, such as lanthanum, cerium, praseodymium, neodymium, samarium and gadolinium, and carboxylic acid, phosphorus containing organic acid, etc., and an auxiliary catalyst, such as an alkylaluminum compound, an organic aluminum hydride compound and an organic aluminum hydride compound.

The cyclopentadienyltitanium compounds include, for instance, cyclopentadienyl titanium halogenated compound, cyclopentadienyl(alkoxy)titanium halogenated compound, bis(cyclopentadienl)titanium dihalogenated compound, bis(cyclopentadienyl)titanium dialkyl compound, bis(cyclopentadienyl)titanium diallylic compound and bis(cyclopentadienyl)titanium dialkoxy compound. Note, the cyclopentadienyltitanium compounds can be used by mixing a reducing agent, or can be used alone without the reducing agent.

The reducing agent used with the cyclopentadienyltitanium compounds include various organo alkali metal compounds such as organic alkylaluminum compounds, organic alkylmagnesium compounds, organic lithium compounds, organic alkali metal hydrides, etc.

Note the organo alkalimetal compounds can be preliminary reacted with a secondary amine, such as dibutylamines, dihexylamines, dibenzylamines, pyrrolidines, hexamethyleneimines and heptamethyleneimines, and used as oprganic alkali metal amide compounds. These homogeneous catalysts can be used with 1 kind singly or optionally, a combination of 2 or more kinds.

The used amount of the homogeneous catalyst can be determined in accordance with the molecular weight of the object polymer, however, it is generally 1 to 50 millimole, preferably 1.5 to 20 millimole and more preferably 2 to 15 millimole, with respect to 1,000 g of the monomer.

In case when the block copolymer is obtained as the diene polymer or the aromatic vinyl polymer, in order to prevent chain length of only one specific component among monomer units constituting the block copolymer to be long, a randomizer, etc. can be used. Specially, in case when the polymerization reaction is progressed by the anionic polymerization, a Lewis-base compound can be preferably used as the randomizer.

Examples of the Lewis-base compound are ether compounds such as dimethyl ether, diethyl ether, diisopropyl ether, dibutyl ether, tetrahydrofuran, diphenyl ether, ethyleneglycol diethyl ether, ethyleneglycol methylphenyl ether; tertiary amine compounds such as tetramethylethylenediamine, trimethylamine, triethylamine, pyridine; alkali metal alkoxide compounds such as potassium-t-amyloxide, potassium-t-butyloxide; phosphine compounds such as triphenylphosphine can be exemplified. These Lewis-base compounds can be used with 1 kind singly or optionally, a combination of 2 or more kinds.

The viscosity of the polymer solution is 300 mPa·s or more and 100,000 mPa·s or less. In case when the viscosity of the polymer solution is less than 300 mPa·s, the water separated from the polymer solution may be mixed again in the polymer solution. In case when the viscosity of the polymer solution exceeds 100,000 mPa·s, the liquid mixture including the polymer solution and the water are not capable to be efficiently introduced to the liquid cyclone-type separation device, and it becomes difficult to separate the water from the liquid mixture. The abovementioned range of the viscosity of the polymer solution makes it possible to efficiently introduce the liquid mixture to the liquid cyclone-type separation device. A productivity of the polymer solution is enhanced, as a result. Considering above, the viscosity of the polymer solution is preferably 500 mPa·s or more, and in addition, preferably 70,000 mPa·s or less, more preferably 40,000 mPa·s or less, further preferably 20,000 mPa·s or less, particularly preferably 15,000 mPa·s or less. The viscosity of the polymer solution can be adjusted in accordance with the weight average molecular weight (Mw) of the polymer or the latter mentioned polymer concentration. Note the viscosity of the polymer solution is a value measured at 25°C with a rotational number of 100 rpm, using B type viscometer.

The polymer concentration of the polymer solution is preferably 10 mass% or more, more preferably 15 mass% or more, further preferably 20 mass% or more, and particularly preferably 25 mass% or more, and in addition, preferably 60 mass% or less, more preferably 50 mass% or less, further preferably 45 mass% or less and particularly preferably 40 mass% or less. According to the separation method of the invention, when the polymer concentration is within the above range, the productivity of the polymer can be enhanced and the separation of the polymer solution and the water can be achieved.

(Liquid mixture)

The liquid mixture of the invention include the above polymer solution and the water. Said water exemplifies distilled water, deionized water, etc.

The liquid mixture is obtained by mixing the polymer solution and the water. By mixing the polymer solution and the water, the metal component, derived from the homogeneous catalyst and remained in the polymer solution, dissolve in the water. Then, the homogeneous catalyst is removed from the polymer solution by separating the water and the polymer solution. Mixing method of the polymer solution and the water is not particularly limited, and a method using mixing apparatus such as an agitator, a shaker, a rotary, etc. are exemplified. Further, a method using dispersion kneaders such as a homogenizer, a ball mill, a sand mill, a roll mill, a planetary mixer and planetary kneader are also exemplified.

An additive amount of the water to the polymer solution is not particularly limited, however, in view of efficiently solving the metal component, derived from the homogeneous catalyst and remained in the polymer solution, in the water, it is preferably 5 mass% or more, more preferably 10 mass% or more, and further preferably 15 mass% or more, and in addition, preferably 300 mass% or less, more preferably 100 mass% or less, and further preferably 50 mass% or less.

A mixing time of the polymer solution and the water is not particularly limited, however, in view of efficiently solving the metal component, derived from the homogeneous catalyst and remained in the polymer solution, in the water, it is preferably 0.5 to 60 min., more preferably 1 to 30 min., further preferably 2 to 20 min. In addition, the temperature while mixing is not particularly limited, however, in view of efficiently solving the homogeneous catalyst in the water, it is preferably 10 to 100°C and more preferably 20 to 80°C.

The viscosity of the liquid mixture is not particularly limited, and suitably determined in accordance with the additive amount of the water to the above-mentioned polymer solution having a predetermined viscosity, however, it is preferably 100 mPa·s or more, more preferably 300 mPa·s or more and particularly preferably 500 mPa·s or more, and in addition, preferably 70,000 mPa·s or less, more preferably 40,000 mPa·s or less, and particularly preferably 20,000 mPa·s or less. In addition, the polymer concentration of the liquid mixture is not particularly limited, and suitably determined in accordance with the additive amount of the water to the above-mentioned polymer solution having a predetermined polymer concentration, however, it is preferably 5 mass% or more, more preferably 10 mass% or more and particularly preferably 15 mass% or more, and in addition, preferably 60 mass% or less, more preferably 55 mass% or less and particularly preferably 45 mass% or less.

(Liquid cyclone-type separation device)

The liquid cyclone-type separation device separates the polymer solution and the water using the centrifugal force, by introducing the liquid mixture inside the device and then revolving the liquid mixture. The liquid cyclone-type separation device has a simple structure relative to the centrifugal separator, and thus, the maintenance of the device is easy.

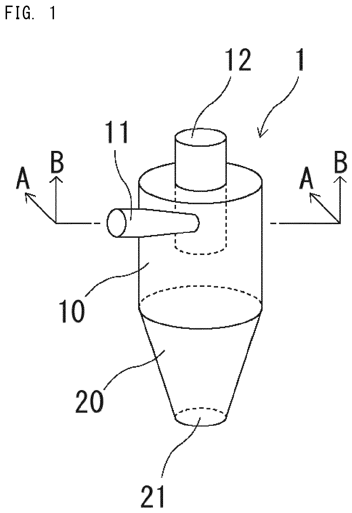

In concrete, as shown in Fig. 1, liquid cyclone-type separation device 1 has hollow cylindrical part 10 and hollow conical part 20 at lower side of cylindrical part 10. Cylindrical part 10 has carry-in passage 11, which introduces the liquid mixture into the liquid cyclone-type separation device 1, and collection opening 12, which collects the polymer solution separated from the liquid mixture. Conical part 20 has discharge opening 21, which discharges the water separated from the liquid mixture, at the lower tip of conical part 20 where diameter is reduced.

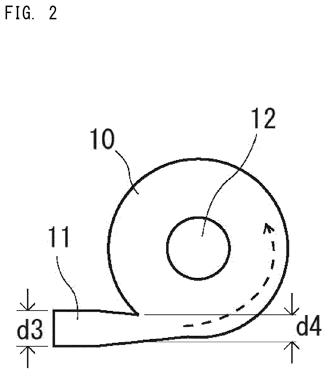

The liquid mixture including the polymer solution and the water is pressurized by a pump, not shown in figures, and supplied in cylindrical part 10 through carry-in passage 11. As shown in Fig. 2, the liquid mixture flows downward revolving along the inner wall of cylindrical part 10 and the inner wall of conical part 20. At this flow, the water, having larger specific gravity relative to the same of the polymer solution, is pressed against the inner wall of cylindrical part 10 and the same of conical part 20 by the centrifugal force, collected by flowing downward along said inner walls, and discharged from discharge opening 21. On the other hand, the polymer solution, having smaller specific gravity relative to the water, is collected by rotating close to the center of cylindrical part 10 and the same of conical part 20, changed its direction to upward at the lower part of conical part 20, raised by revolving along the center axis of cylindrical part 10 and the same of conical part 20, and then discharged from collection opening 12. Thus, the polymer solution and the water are separated.

The rate of introducing the liquid mixture inside the liquid cyclone-type separation device, the introduction speed, is preferably 0.1 m/s or more, more preferably 0.3 m/s or more, and further preferably 0.6 m/s or more. The upper limit of the introduction speed is not particularly limited, however, it is preferably 10 m/s or less. By determining the introduction speed within the above range, the polymer solution and the water can be sufficiently separated, making the productivity of the polymer solution superior. The introduction speed can be calculated from "the flow amount of the liquid mixture" and "the cross-sectional area of carry-in passage 11". introduction speed = the flow amount / the cross-sectional area

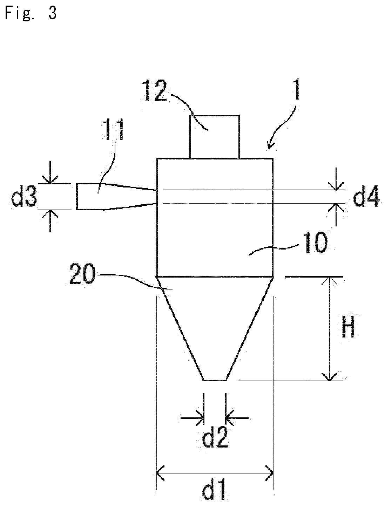

The cross-sectional area of carry-in passage 11 is not particularly limited, and it is suitably determined by making the introduction speed within the above range, in accordance with the flow amount of the liquid mixture. Note, as shown in Fig. 3, in case when inner diameter of carry-in passage 11 becomes smaller toward introducing direction of the liquid mixture, the cross-sectional area of a place where the inner diameter is minimized is determined "the cross-sectional area of carry-in passage 11".

In the liquid cyclone-type separation device, relations of height H of conical part 20, maximum diameter d1 of the inner diameter of conical part 20 and minimum diameter d2 of the inner diameter of the conical part, shown in Fig. 3, are preferably shown by the following formulas (2) and (3).

$$H / d1 = 1.5 \text{ to } 5.0 \qquad (2)$$

$$d1 / d2 = 3.0 \text{ to } 10.0 \qquad (3)$$

In addition, as shown in Fig. 3, inner diameter of carry-in passage 11 preferably becomes smaller toward introducing direction of the liquid mixture. In this case, the relation of maximum diameter d3 and minimum diameter d4 of inner diameter in carry-in passage 11 is preferably shown by the following formula (4).

$$d3 / d4 = 1.5 \text{ to } 5.0 \qquad (4)$$

According to the liquid cyclone-type separation device, a structure satisfying the relations of the above formulas (2), (3) and (4), the productivity of the polymer solution is superior, due to an efficient separation of the polymer solution and the water. Considering above, a number range of formula (2) is preferably 1.8 to 4.0, and more preferably 2.0 to 3.0. In addition, a number range of formula (3) is preferably 5.0 to 9.0, and more preferably 6.0 to 7.0. Further, a number range of formula (4) is preferably 2.0 to 4.0, and more preferably 2.5 to 3.5.

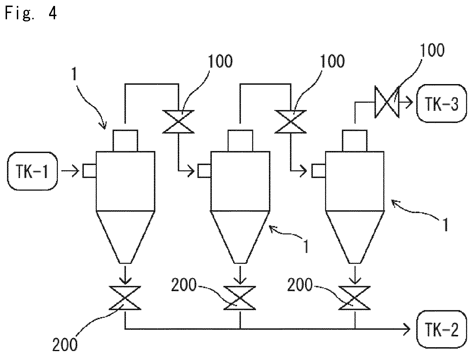

According to the separation method of the invention, it is preferable to use a plurality of liquid cyclone-type separation device 1 arranged in a line. In addition, the liquid mixture can be separated by circulating in the liquid cyclone-type separation device, however, considering the productivity, the liquid mixture is preferably separated by not circulating in the liquid cyclone-type separation device. In concrete, the collection opening of a liquid cyclone-type separation device is disposed to connect the carry-in passage of the other liquid cyclone-type separation device. Note, as shown in Fig. 4, the collection opening of a liquid cyclone-type separation device is connected with the carry-in passage of the other liquid cyclone-type separation device via valve 100. The water can be efficiently removed from the liquid mixture by disposing the liquid cyclone-type separation devices as above. An arrangement number of the liquid cyclone-type separation device is 1 device or more, preferably 2 devices or more, and more preferably 3 devices or more. The upper limit of the arranged number of the liquid cyclone-type separation device is not particularly limited, however, it is preferably 20 devices or less.

EXAMPLES

Hereinafter, the invention is described referring to the examples, but the invention is not limited thereto. Note, "parts" and "%" in the present examples are on a mass basis unless specially mentioned.

[The viscosity of the polymer solution]

The viscosity of the polymer solution was measured using B type viscometer, a digital viscometer DV-II + Pro made by Brookfield, at a temperature of 25°C and a rotational number of 100 rpm.

[Manufacturing the polymer solution]

Polymer solution 1

0.0434 parts of n-butyllithium as the homogeneous catalyst was added to a pressure-resistant reactor where 122 parts of cyclohexane, 0.0012 parts of N, N, N',N'-tetramethylethylenediamine (TMEDA) and 9.6 parts of styrene were stirred at 40°C, polymerized for an hour while raising the polymer temperature to 50°C, and the polystyrene block polymer was obtained. The polymerization conversion of styrene at this point was 100%.
Apart of the reaction liquid was sampled and a weight-average molecular weight of the polystyrene block polymer was measured by a gel permeation chromatography. Weight-average molecular weight of the polystyrene block polymer was $15.8 \times 10^3$. Note, the weight-average molecular weight was measured by a high speed liquid gel permeation chromatography having tetrahydrofuran as a carrier, as a polystyrene converted value.
Subsequently, 38.4 parts of isoprene was added taking an hour while controlling the reaction temperature between 50°C to 60°C. After the addition, further polymerized for an hour and styrene-isoprene di-blockcopolymer was obtained. Polymerization conversion of isoprene at this point was 100%. Sampling a part of the reaction liquid and measuring weight-average molecular weight of styrene-isoprene di-block copolymer (Component (b)) by gel permeation chromatography, it was $92 \times 10^3$.
Subsequently, 0.0073 parts of dimethyldichlorosilane was added as a coupling agent, the coupling reaction was performed for 2 hours, styrene-isoprene-styrene tri-block copolymer (Component (a)) was formed, and then polymer solution 1 was obtained. The polymer concentration of polymer solution 1 was 28.2% and the viscosity of polymer solution 1 was 3,700 mPa·s. Note, styrene-isoprene-styrene tri-block copolymer is written "SIS" in Table 1.
A part of the reaction liquid was sampled and measured by the gel permeation chromatography. Styrene unit content in the above tri-block copolymer was 20%, weight-average molecular weight of Component (a) was $174 \times 10^3$ and a mass ratio of Component (a) and Component (b) was 6:4. Note the ratio of Component (a) and Component (b) was obtained from the peak area of each copolymer obtained by the high speed liquid gel permeation chromatography.

Polymer solution 2

2 devices of a stainless steel made polymerization reactor, having a stirrer, a jacket for cooling and a reflux cooler, were connected in a line, and a continuous polymerization was performed as mentioned hereinafter.
1, 3-butadiene solution, including 11% of toluene, 40% of cis-2-butene, 9 % of trance-2-butene and 6 % of the other non-aqueous organic solvent such as n-butane, was made to flow inside the pipe at the flow speed of 70 kg per hour. Inside the pipe, 1,2-butadiene at 800 millimole per hour as the molecular weight regulator, trimethyl orthoformate at 5 millimole per hour as the gelation inhibitor, and the water at 2.5 g per hour were added and dispersed, and obtained a dispersion liquid. Note, the water was added through a stainless steel made sintered filter having a pore size of 2 micron.
To the dispersion liquid, diethylaluminium monochloride was further added at 350 millimole per hour as a toluene solution, and then introduced thereof to the polymerization reactor. Toluene solution of 3% cobalt octenate was added to the polymerization reactor from the other pipe at 28 g per hour, continuously polymerized for 120 hours at 20°C with a residence time of 2 hours, and then a solution of a high-cis polybutadiene was obtained.
From the second devices of the polymerization reactor, the high-cis polybutadiene solution was continuously drawn out using the transfer pump. While drawing, methanol, in a state of 10% toluene solution, was added at 360 g per hour, from the suction side of the transfer pump. In addition, stirred and mixed thereof by a static mixer, having an element number of 6 and connected to the discharge side of the pump, and then polymerization reaction was terminated. The polymerization conversion at this point was 65%.
Said solution was introduced in the container for the steam stripping. 1,000 parts of the water, 180 parts of steam (a temperature of 240°C and a pressure of 1,020 KPa), and 0.8 parts of a sodium hydroxide 10% aqueous solution with respect to 100 parts of the high-cis polybutadiene generated by the polymerization were introduced to the container for the steam stripping. The temperature inside the container was 105°C, the pressure inside the container was 320 kPa, and an average residence time was 30 min. During this step, unreacted 1,3-butadiene and the non-aqueous organic solvent were removed, and obtained a high-cis polybutadiene which was crumb-like dispersed in the water. The dispersion liquid, in which the high-cis polybutadiene is crumb-like dispersed in the water, was continuously drawn out from the container for the steam stripping. The dispersion liquid was wrung by hand, and crumb of 20% water content was obtained. The obtained crumb was dried for an hour by a hot wind of 80°C, and then a high-cis polybutadiene having a water content of 0.1% was obtained. The obtained high-cis polybutadiene showed 430,000 of weight average molecular weight (Mw) and the molecular weight dispersion (Mw/Mn) was 2.8, when measured by the gel permeation chromatography. In addition, the cis ratio in butadiene unit of the high-cis polybutadiene obtained by $^{13}$C-NMR spectrum measurement was 97.2%. 100 parts of the high-cis polybutadiene was solved in 585 parts of cyclohexane, and then a polymer solution 2 of polybutadiene rubber (BR) was obtained. Polymer concentration of polymer solution 2 was 14.6% and the viscosity of polymer solution 2 was 6,000 mPa·s.

Polymer Solution 3

In a nitrogen atmosphere, 1,890 g of n-hexane, 810 g of cyclohexane, 500 g of 1,3-butadiene were poured in an autoclave, 6.5 millimole of n-butyllithium was added, and started to polymerize at 50°C. 30 minutes after the start of the polymerization, 500 g of 1,3-butadiene was continuously added for 30 minutes. Subsequently, the polymerization reaction was continued for 30 minutes. And then, after confirming that the polymerization conversion is about 100%, 2.5 millimole of tin tetrachloride was added and reacted for 15 minutes, 4.5 millimole of N-methyl-2-pyrrolidone was added as a modifier, and reacted for 10 minutes. Then, 12 millimole of methanol was added as a polymerization terminator and polymer solution 3 of polybutadiene rubber (BR) was obtained. The polymer concentration of polymer solution 3 was 27%, and the viscosity of polymer solution 3 was 55,000 mPa·s.
A part of the reaction liquid was sampled and measured by the gel permeation chromatography. Weight-average molecular weight (Mw) of the polymer was 539,000 and molecular weight dispersion (Mw/Mn) was 1.7. In addition, a vinyl bond content in a butadiene unit of the polybutadiene rubber was 9 mol%. Note, a microstructure of the polybutadiene rubber was measured by $^1$H-NMR. The measuring device was a trade name of JNM-ECA-400WB made by JEOL and a measuring solvent of a deuterated chloroform.

(Example 1)

The polymer concentration of polymer solution 1 was adjusted to 20 mass% and the viscosity of polymer solution 1 was adjusted to 710 mPa·s. In concrete, cyclohexane was added to polymer solution 1 and adjusted thereof. 100 mass parts of thus adjusted polymer solution 1 and 20 mass parts of the water were continuously poured into the mixing tank. Then, mixed thereof in the mixing tank using a PRIMIX made HOMOGENIZING MIXER, and obtained the liquid mixture. The residence time of polymer solution 1 and the water in the mixing tank was 3 minutes, and the rotational number of the HOMOGENIZING MIXER was 10,000 rpm. And then, the liquid mixture was received in a storage tank, shown as TK-1 in Fig. 4.
Subsequently, the liquid mixture was supplied to liquid cyclone-type separation device 1, NS NEW CYCLONE-Z made by Nihon Spindle Manufacturing Co., Ltd., at an introduction speed of 1.0m/s. 3 devices of liquid cyclone-type separation device 1 were connected in a line, as shown in Fig. 4. At the time, valve 100 connected to the collection opening of the liquid cyclone-type separation device was opened, and valve 200 connected to the discharge opening was closed. The residence time of the liquid mixture in the liquid cyclone-type separation device was 5 minutes.
After delivering all the liquid mixture in TK-1, valve 200 connected to the discharge opening of the liquid cyclone-type separation device was opened, the water was extracted from the liquid mixture, and then received in the storage tank, shown as TK-2 in Fig. 4. Mass of the water in TK-2 was measured. A removal rate [%] of the water was calculated from mass [kg] of the water in the liquid mixture in TK-1 and mass [kg] of the water drawn out in TK-2 by the following formula.

$$\text{Removal rate [\%] of the water} = (\text{mass [kg] of the water drawn out in TK-2}) \, / \, (\text{mass [kg] of the water in the liquid mixture in TK-1}) \times 100$$

A processing speed of the polymer was calculated by the following formula.

$$\text{Polymer processing speed [kg/h]} = \frac{\text{(Mass [kg] of polymer solution in the liquid mixture in TK-1)}}{\text{(required time [h] for delivering the liquid mixture from TK-1 to the liquid cyclone-type separation device)}}$$

(Ex. 2 to 7 and Comp. Ex. 3)

As shown in Table 1, a removal rate of the water, a polymer processing speed were calculated in the same manner as example 1, except, the polymer solution, the polymer concentration, the viscosity of the polymer solution, the introduction speed and the arranged number of the devices in line were changed. In examples 2 to 5 and comparative example 3, the polymer concentration was adjusted by evaporating cyclohexane from polymer solution 1 and concentrating thereof. In addition, the introduction speed was adjusted by the flow amount of the liquid mixture.

In comparative example 3, due to a high viscosity of the polymer solution, the pressure loss in the carry-in passage of the liquid cyclone-type separation device was large, 800 kPa or more. And it was difficult to speed up introduction speed of 0.09 m/s or more.

(Comp. Ex. 1)

The polymer concentration of polymer solution 1 was adjusted to 30.3 mass% and the viscosity of polymer solution 1 was adjusted to 6,000 mPa·s. In concrete, the polymer concentration was adjusted by evaporating cyclohexane from polymer solution 1, and adjusting thereof. 100 mass parts of thus adjusted polymer solution 1 and 20 mass parts of the water were continuously poured into a mixing tank. Then, mixed thereof in the mixing tank using a PRIMIX made HOMOGENIZING MIXER, and obtained the liquid mixture. The residence time of polymer solution 1 and the water in the mixing tank was 3 minutes, and the rotational number of the HOMOGENIZING MIXER was 10,000 rpm.

7,500 g of the obtained liquid mixture was sampled in a container, covered and settled.

After 3 days, the water remained in the bottom of the container was extracted, and mass thereof was measured. A removal rate [%] of the water was calculated from mass [g] of the water in the liquid mixture and mass [g] of the water drawn out from the container.

$$\text{A removal rate [\%] of the water} = \frac{\text{(mass [g] of the water drawn out from the container)}}{\text{(mass [g] of the water in the liquid mixture poured in the container)}} \times 100$$

A processing speed of polymer was calculated from the following formula.

$$\text{The processing speed [kg/h] of the polymer} = \frac{\text{(mass [g] of the polymer solution in the liquid mixture poured in the container)}}{\text{(settled hour [h])}} / 1{,}000$$

(Comp. Ex. 2)

In the same manner as example 1, the polymer concentration of polymer solution 1 was adjusted to 30.3 mass% and the viscosity of polymer solution 1 was adjusted to 6,000 mPa·s. 100 mass parts of thus adjusted polymer solution 1 and 20 mass parts of the water were continuously poured into the mixing tank. Then, mixed thereof in the mixing tank using a PRIMIX made HOMOGENIZING MIXER, and obtained the liquid mixture. The residence time of polymer solution 1 and the water in the mixing tank was 3 minutes, and the rotational number of the HOMOGENIZING MIXER was 10,000 rpm.

The obtained 50 g of the liquid mixture was poured in the centrifugal settling tub, and processed by the centrifugal separator, H-103NS made by Kokusan. The rotational number of the centrifugal separator was 4,000 rpm and the rotational time was 5 minutes. The water remained in the bottom of the centrifugal settling tub was extracted, and mass thereof was measured. A removal rate [%] of the water was calculated from mass [g] of the water in the liquid mixture and mass [g] of the water drawn out from the centrifugal settling tub.

A removal rate [%] of the water = (mass [g] of the water drawn out from the centrifugal settling tub) / (mass [g] of the water in the liquid mixture poured in the centrifugal settling tub) × 100

A processing speed of polymer was calculated from the following formula.

The processing speed [kg/h] of the polymer = (mass [g] of the polymer solution in the liquid mixture poured in the centrifugal settling tub) / (rotary time [h] of the centrifugal separator) / 1,000

[ Table 1]

Table 1

| | unit | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|---|
| Polymer solution | | polymer solution 1 | polymer solution 1 | polymer solution 1 | polymer solution 1 | polymer solution 1 | polymer solution 2 | Polymer solution 3 | polymer solution 1 | polymer solution 1 | polymer solution 1 |
| polymer | | SIS | SIS | SIS | SIS | SIS | BR | BR | SIS | SIS | SIS |
| non-aqueous organic solvent | | CHA | CHA | CHA | CHA | CHA | CHA | CHA+HEX | CHA | CHA | CHA |
| concentration of polymer | mass% | 20 | 30.3 | 30.3 | 30.3 | 35 | 14.6 | 27 | 30.3 | 30.3 | 44.7 |
| viscosity of polymer solution | mPa·s | 710 | 6000 | 6000 | 6000 | 16000 | 6000 | 55000 | 6000 | 6000 | 120000 |
| amount of polymer solution | mass parts | 100 | 100 | 100 | 100 | 100 | 100 | 100 | 100 | 100 | 100 |
| amount of water | mass parts | 20 | 20 | 20 | 20 | 20 | 20 | 20 | 20 | 20 | 20 |
| device | | Liquid cyclone-type separation device | Liquid cyclone-type separation device | Liquid cyclone-type separation device | Liquid cyclone-type separation device | Liquid cyclone-type separation device | Liquid cyclone-type separation device | Liquid cyclone-type separation device | settled separation | centrifugal separator | Liquid cyclone-type separation device |
| introduction speed | m/s | 1 | 0.4 | 1 | 1 | 1 | 1 | 1 | - | - | 0.09 |
| the arranged number of the devices in line | number of devices | 3 | 3 | 3 | 10 | 3 | 3 | 3 | 1 | 1 | 3 |
| treatment type | | continuous type | continuous type | continuous type | continuous type | continuous type | continuous type | continuous type | batch type | batch type | continuous type |
| removal rate of water | % | 82.3 | 54.0 | 70.5 | 76.5 | 46.9 | 70.9 | 37.8 | 51.5 | 65 | 0 |

EP 3 275 523 B1

13

| | unit | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|---|
| polymer processing speed | kg/h | 39 | 22 | 59 | 59 | 68 | 28 | 53 | 0.03 | 0.15 | 7.60 |
| CHA: cyclohexane<br>HEX: n-hexane | | | | | | | | | | | |

From Table 1, it can be noticed that the removal rate of the water from the liquid mixture is high, and a polymer processing speed is superior, according to the separation method of the invention.

NUMERICAL REFERENCES

1: Liquid cyclone-type separation device

10: Hollow cylindrical part

11: Carry-in passage

12: Collection opening

20: Conical part

21: Discharge opening

**Claims**

1.  A method for separating a water from a liquid mixture, wherein
    the liquid mixture comprises the water and a polymer solution,
    the polymer solution comprises a polymer and a non-aqueous organic solvent,
    the polymer solution has a viscosity of 300 mPa·s or more and 100,000 mPa·s or less,
    the method for separating the water from a liquid mixture comprises a step of introducing the liquid mixture in a liquid cyclone-type separation device (1) to separate the water from the liquid mixture,
    the liquid cyclone-type separation device (1) comprises a hollow cylindrical part (10) and a hollow conical part (20) at a lower side of the cylindrical part,
    the cylindrical part comprises a carry-in passage (11), introducing the liquid mixture in the liquid cyclone-type separation device (1), and a collection opening (12), **characterized by** collecting the polymer solution separated from the liquid mixture, and
    the conical part (20) comprises a discharge opening (21), discharging the water separated from the liquid mixture, provided at the lower tip of a reduced diameter.

2.  The method for separating the water from the liquid mixture according to claim 1, wherein,
    a polymer concentration of the polymer solution is 10 mass% or more and 60 mass% or less.

3.  The method for separating the water from the liquid mixture according to any one of claims 1 or 2, wherein the polymer is at least one of a diene polymer and an aromatic vinyl polymer.

4.  The method for separating the water from the liquid mixture according to any one of claims 1 to 3, wherein a rate of introducing the liquid mixture inside the liquid cyclone-type separation device (1) is 0.1 m/s or more.

5.  The method for separating the water from the liquid mixture according to any one of claims 1 to 4, wherein a plurality of the liquid cyclone-type separation devices (1) are arranged in a line.

**Patentansprüche**

1.  Verfahren zum Abtrennen von Wasser aus einer Flüssigkeitsmischung, wobei
    die Flüssigkeitsmischung Wasser und eine Polymerlösung umfasst,
    die Polymerlösung ein Polymer und ein nichtwässriges organisches Lösemittel umfasst,
    die Polymerlösung eine Viskosität von 300 mPa·s oder mehr und 100 000 mPa·s oder weniger aufweist,
    das Verfahren zum Abtrennen von Wasser aus einer Flüssigkeitsmischung einen Schritt eines Einleitens der Flüssigkeitsmischung in eine zyklon-artige Flüssigkeitsabtrennvorrichtung (1), um das Wasser von der Flüssigkeitsmischung abzutrennen, umfasst,

die zyklon-artige Flüssigkeitsabtrennvorrichtung (1) einen hohlen zylindrischen Teil (10) und einen hohlen konischen Teil (20) an einer niedrigeren Seite des zylindrischen Teils umfasst,

der zylindrische Teil eine Eintragspassage (11), welche die Flüssigkeitsmischung in die zyklon-artike Flüssigkeitsabtrennvorrichtung (1) einführt, und eine Sammelöffnung (12) aufweist, **gekennzeichnet durch**

Sammeln der Polymerlösung, welche aus der Flüssigkeitsmischung abgetrennt wurde, und

den konischen Teil (20), welcher eine Austrittsöffnung (21) umfasst, welche das Wasser, welches aus der Flüssigkeitsmischung abgetrennt wurde, ablässt, und welche an der niedrigeren Spitze eines reduzierten Durchmessers vorgesehen ist.

**2.** Verfahren zum Abtrennen von Wasser aus der Flüssigkeitsmischung nach Anspruch 1, wobei eine Polymerkonzentration der Polymerlösung 10 Massen% oder mehr und 60 Massen% oder weniger beträgt.

**3.** Verfahren zum Abtrennen von Wasser aus der Flüssigkeitsmischung nach einem der Ansprüche 1 oder 2, wobei das Polymer mindestens eines aus einem Dienpolymer und einem aromatischen Vinylpolymer ist.

**4.** Verfahren zum Abtrennen von Wasser aus der Flüssigkeitsmischung nach einem der Ansprüche 1 bis 3, wobei eine Geschwindigkeit des Einführens der Flüssigkeitsmischung in die zyklon-artige Flüssigkeitsabtrennvorrichtung (1) 0,1 m/s oder mehr beträgt.

**5.** Verfahren zum Abtrennen von Wasser aus der Flüssigkeitsmischung nach einem der Ansprüche 1 bis 4, wobei eine Mehrzahl der zyklon-artigen Flüssigkeitsabtrennvorrichtungen (1) in einer Linie angeordnet ist.

## Revendications

**1.** Procédé pour séparer l'eau d'un mélange liquide, dans lequel

le mélange liquide comprend de l'eau et une solution de polymère,

la solution de polymère comprend un polymère et un solvant organique non aqueux,

la solution de polymère a une viscosité de 300 mPa.s ou plus et de 100 000 mPa.s ou moins,

le procédé pour séparer l'eau d'un mélange liquide comprend une étape d'introduction du mélange liquide dans un dispositif de séparation de liquide de type cyclone (1) pour séparer l'eau du mélange liquide,

le dispositif de séparation de liquide de type cyclone (1) comprend une partie cylindrique creuse (10) et une partie conique creuse (20) au niveau d'un côté inférieur de la partie cylindrique,

la partie cylindrique comprend un passage d'entrée (11), introduisant le mélange liquide dans le dispositif de séparation de liquide de type cyclone (1), et une ouverture de collecte (12), **caractérisée par** la collecte de la solution de polymère séparée du mélange liquide, et

la partie conique (20) comprend une ouverture de décharge (21), déchargeant l'eau séparée du mélange liquide, disposée au niveau de la pointe inférieure ayant un diamètre réduit.

**2.** Procédé pour séparer l'eau d'un mélange liquide selon la revendication 1, dans lequel la concentration de polymère dans la solution de polymère est de 10 % en masse ou plus et de 60 % en masse ou moins.

**3.** Procédé pour séparer l'eau d'un mélange liquide selon l'une quelconque des revendications 1 et 2, dans lequel le polymère est au moins l'un parmi un polymère de diène et un polymère vinylaromatique.

**4.** Procédé pour séparer l'eau d'un mélange liquide selon l'une quelconque des revendications 1 à 3, dans lequel la vitesse d'introduction du mélange liquide à l'intérieur du dispositif de séparation de liquide de type cyclone (1) est de 0,1 m/s ou plus.

**5.** Procédé pour séparer l'eau d'un mélange liquide selon l'une quelconque des revendications 1 à 4, dans lequel une pluralité des dispositifs de séparation de liquide de type cyclone (1) sont disposés en ligne.

FIG. 1

FIG. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009091574 A
- JP H11267405 A

- EP 2368917 A1